Europäisches Patentamt

European Patent Office

Office européen des brevets

(19)

(11) **EP 0 579 522 B1**

(12) **FASCICULE DE BREVET EUROPEEN**

(45) Date de publication et mention
de la délivrance du brevet:
**24.01.1996 Bulletin 1996/04**

(51) Int Cl.6: **F16C 33/08**, F16C 33/14

(21) Numéro de dépôt: **93401653.6**

(22) Date de dépôt: **28.06.1993**

(54) **Coussinet pour articulations ou paliers fortement chargés, avec une garniture frettée en feuillard roulé**

Buchse für hochbelastbare Gelenke oder Lager, mit einem Schrumpfring aus gerolltem Stahlblech

Bushing for heavily loaded joints or bearings, with a shrink ring made of a rolled blank

(84) Etats contractants désignés:
**BE DE ES FR GB IT LU NL**

(30) Priorité: **10.07.1992 FR 9208603**

(43) Date de publication de la demande:
**19.01.1994 Bulletin 1994/03**

(73) Titulaire:
**CENTRE STEPHANOIS DE RECHERCHES MECANIQUES HYDROMECANIQUE ET FROTTEMENT Société dite:**
**F-42160 Andrezieux Boutheon (FR)**

(72) Inventeurs:
• **Tourneux, Daniel**
**F-42700 Firminy (FR)**

• **Mariatte, René**
**F-42740 Saint Paul en Jarez (FR)**
• **Dajoux, Bernard**
**F-42160 Andrezieux (FR)**

(74) Mandataire: **CABINET BONNET-THIRION**
**F-75003 Paris (FR)**

(56) Documents cités:
CH-A- 165 232        DE-A- 2 545 922
FR-A- 773 144        FR-A- 818 833
US-A- 4 144 626

• PATENT ABSTRACTS OF JAPAN vol. 4, no. 174 (C-33)2 Décembre 1980 & JP-A-55 113 836 (FUJI DENSHI KOGYO) 2 Septembre 1980

## Description

L'invention se rapporte à un coussinet pour articulation ou palier fortement chargé travaillant en ambiance abrasive selon la première partie de la revendication 1. Un tel coussinet ou palier est connu du document DE-A-25 45 922.

Dans différents secteurs de la mécanique on a besoin d'articulations ou de paliers, peu exigeants en matière de vitesse de rotation ou de précision, mais rustiques et notamment capables:

a) d'une bonne tenue à l'usure, notamment abrasive (par exemple en présence de boues ou d'oxydes de fer);
b) d'une bonne capacité de charge, et supportant des surcharges dynamiques et des chocs;
c) de bonnes caractéristiques de frottement (fonctionnement silencieux, graissage uniquement au montage);
d) une bonne tenue à la corrosion pour supporter la présence d'eau ou de projections salines.

On peut citer en exemple:

Dans le secteur de travaux publics, des articulations de pelles mécaniques, de chargeuses, des paliers d'élévateurs, des articulations de pieds de bielles de pompes à piston;

Dans le secteur de la sidérurgie, des articulations de chaînes de ripage, de fermetures de moules, des paliers de roues de fours à soles;

Dans le secteur de la machine agricole, des paliers de machines, des articulations de pont avant de tracteur;

Dans le secteur des véhicules de transport, des articulations de ressorts de suspension et de timonerie de freins.

Les paliers classiques, tels des paliers à billes ou à rouleaux, conçus pour des vitesses de rotation élevées, sont d'un prix excessif pour des utilisations du genre de celles qui viennent d'être énumérées, d'autant que les charges à prévoir conduiraient à les surdimensionner, et qu'ils devraient être logés dans des enceintes étanches, pour supporter sans dommages les risques d'abrasion et de corrosion, ce qui en augmenterait le coût.

Les paliers à garnitures en métaux relativement tendres, comme le bronze et l'antifriction, supportent mal les ambiances abrasives, ainsi que des pressions de charge élevées.

Les aciers durcis superficiellement apportent une solution plus satisfaisante pour la réalisation de paliers du genre considéré ci-dessus; surtout lorsque le traitement superficiel améliore la résistance à la corrosion, et le coefficient de frottement. Toutefois, le traitement superficiel, surtout lorsqu'il est limité à la surface de portée, est relativement onéreux. Et les performances sous charge restent inférieures à ce qui serait souhaitable.

L'invention vient apporter une solution remarquable dans le domaine considéré. A cet effet, elle propose un coussinet pour articulation ou palier fortement chargé travaillant en ambiance abrasive, comportant un corps généralement annulaire avec un alésage axial muni d'une garniture où pivote un axe en contact avec une face de portée de la garniture, cette garniture étant constituée d'un feuillard rectangulaire d'épaisseur appropriée, roulé autour d'un axe perpendiculaire à sa longueur et fretté dans l'alésage, en acier dont au moins la face de portée a subi un traitement de durcissement superficiel caractérisé en ce que la face de portée est durcie sur une profondeur relative, rapportée à l'épaisseur, comprise entre 0,23 et 0,27, ce feuillard présentant, par rapport au développé d'une fibre neutre d'une garniture non contrainte dans l'alésage, un excédent relatif de longueur compris entre 0,3 et $9.10^{-2}$.

La Demanderesse a découvert que le durcissement superficiel, sur une profondeur limitée pour ne pas fragiliser le coeur du feuillard, conjointement avec un frettage dosé de la garniture suffisant pour que la face de portée soit en compression tangentiellement à sa surface, donnait au coussinet une résistance à l'usure abrasive particulièrement élevée, et d'une façon générale, lui conférait des propriétés frottantes inattendues. La description détaillée viendra souligner ces propriétés.

De façon préférée, la gamme d'excédent relatif de longueur, exprimée en $10^{-2}$, est définie, en fonction du diamètre Ø de l'alésage, conformément au tableau ci-après:

| Ø alésage (mm) | Excédent relatif en $10^{-2}$ |
|---|---|
| 10-25 | 3-9 |
| 25-35 | 2,2-4,3 |
| 35-45 | 2-3 |
| 45-55 | 1,7-2,9 |
| 55-100 | 1,1-2,3 |
| 100-140 | 0,7-1,5 |
| 140-260 | 0,4-1,0 |
| 260 et au-delà | 0,3-0,7 |

On notera que l'excédent relatif de longueur appropriée diminue lorsque croît le diamètre de l'alésage. Aux fortes épaisseurs relatives de la garniture correspondent donc des taux de déformations plastiques plus grandes. En pratique, on utilisera des feuillards d'épaisseur comprise entre 1,5 et 5,0 mm, sans dépasser 15% du diamètre de l'alésage.

De préférence, le traitement superficiel est un traitement thermochimique qui provoque une diffusion d'un hétéro-élément dans la profondeur relative. Cet hétéro-élément peut être l'azote apporté par nitruration au bain de sel et par nitruration gazeuse, du carbone apporté par cémentation, auquel cas la garniture sera trempée, ou encore simultanément carbone et azote, par carbonitruration. Enfin, l'hétéro-élément peut être du chrome (chromisation).

On obtient également de bons résultats, soit par une trempe de la face de portée après chauffage superficiel par induction haute fréquence, soit par un écrouissage superficiel de cette face de portée, par galetage, martelage, brunissage, grenaillage ou moletage.

Des caractéristiques secondaires, et les avantages de l'invention ressortiront d'ailleurs de la description qui va suivre, à titre d'exemple, en référence aux dessins annexés dans lesquels:

La figure 1 est une vue, partiellement coupée, d'un coussinet de palier selon l'invention, engagé sur un axe;

La figure 2 est une coupe schématique partielle d'un coussinet avant l'engagement de la garniture dans le corps de coussinet.

Selon la forme de réalisation choisie et représentée aux figures, le coussinet 1 dans son ensemble, dans lequel pivote un axe 2, comporte un corps 3, annulaire, dans lequel est pratiqué un alésage cylindrique de diamètre D3. Dans cet alésage est emmanchée à force une garniture 4, formée d'un feuillard rectangulaire en acier qui a été roulé en cylindre autour d'un axe perpendiculaire à sa longueur, d'épaisseur $\underline{e}$.

La face intérieure 4$\underline{b}$ de la garniture, qui forme face de portée pour l'axe 2, a été durcie superficiellement sur une profondeur comprise entre 0,23 et 0,27$\underline{e}$; le processus de durcissement superficiel sera commenté plus loin.

On notera toutefois que les deux faces, interne et externe de la garniture 4 peuvent avoir été durcies superficiellement, pour des raisons de commodité, étant entendu que le durcissement éventuel de la face extérieure n'a pas de rôle fonctionnel.

Le roulage du feuillard rectangulaire qui constitue la garniture 4 autour d'un axe perpendiculaire à ses grands côtés, amène en coïncidence les deux petits côtés du rectangle, sous forme d'une fente 5 parallèle à l'axe.

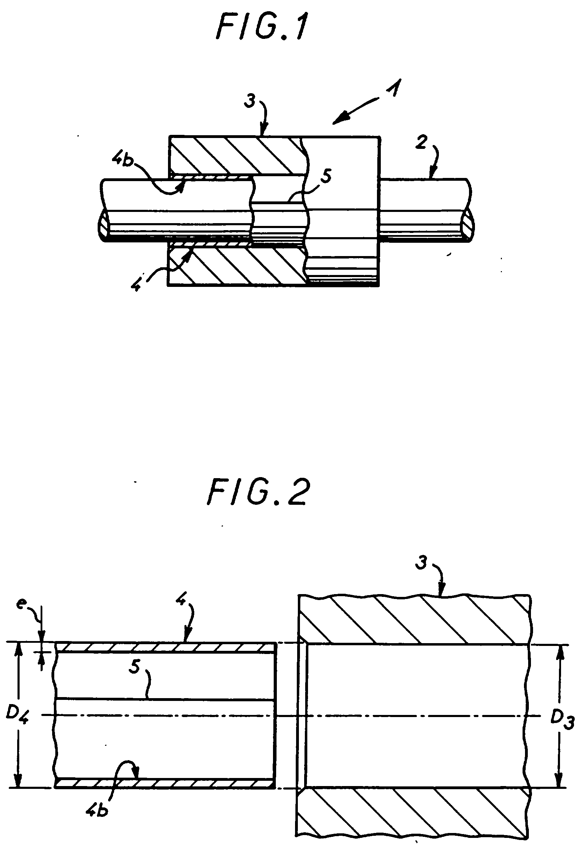

Comme représenté figure 2, le diamètre extérieur D4 de la garniture 4 est supérieur, avant emmanchement, à celui de l'alésage D3, pour obtenir, après emmanchement, un frettage qui provoque, dans la face de portée 4$\underline{b}$, des contraintes de compression tangentielles comprises entre des limites, dont la Demanderesse a découvert l'existence et précisé les valeurs.

L'exemple suivant permettra d'appréhender la démarche de la Demanderesse dans la caractérisation de l'invention.

### EXEMPLE 1

On veut réaliser un palier oscillant pour un arbre en acier 16NC6 cémenté, trempé et rectifié à un diamètre de 30 mm.

Le corps de coussinet est annulaire avec un alésage intérieur de diamètre $D_3$ de 34 mm.

Pour la garniture, on part d'un feuillard de 2 mm d'épaisseur en acier non allié XC38 que l'on découpe pour former des bandes de 100 mm de largeur.

De ces bandes on tire des rectangles de longueur L, dérivés du développé $L_o$ de la fibre neutre de garniture non contrainte. On a

$$L_o = (D3 - e) \cdot \pi \tag{1}$$

soit en l'espèce $L_o = 100{,}53$ mm

$$\text{La longueur } L = (1 + \lambda) L_o \tag{2}$$

est prise de valeur croissante entre 103 et 104 mm ($\lambda$ compris entre 2,46 et 3,45 %).

On notera que deux essais à L = 102 et L = 105 se sont révélés inopérants. Avec L = 102, la garniture était entraînée par l'axe; avec L = 105, la déformation de la garniture à l'emmanchement est telle qu'il est impossible d'introduire l'axe dans le coussinet.

Les rectangles ont été nitrurés au bain de sel cyanate et carbonates alcalins selon FR-A-2 171 993 et FR-A-2 271 307, la profondeur de couche nitrurée étant sensiblement de 0,5 mm, soit 0,25 fois l'épaisseur, sensiblement, le réglage de profondeur étant ajusté par le temps d'immersion.

Les paliers oscillants ont été soumis à des essais d'usure en rotation alternée sur 100° d'arc, à la fréquence 0,67 Hz, avec des cycles 15 secondes de marche 60 secondes d'arrêt.

Pression de contact 40 MPa

Vitesse périphérique moyenne 0,035 m/s
Ambiance battitures
Graissage au montage - aucun apport de lubrifiant au cours de l'essai.
Durée d'essai 200 heures.

En fin d'essai, on mesure l'usure de la face de portée 4b;les résultats sont rassemblés dans le tableau I ci-après:

TABLEAU I

| L(mm) | 103 | 103,4 | 103,45 | 103,5 | 103,6 | 103,65 | 103,7 | 104 |
|---|---|---|---|---|---|---|---|---|
| $\lambda \times 10^2$ | 2,46 | 2,85 | 2,90 | 2,95 | 3,05 | 3,10 | 3,15 | 3,45 |
| usure(mm) | 0,9 | 0,55 | 0,10 | 0,09 | 0,08 | 0,11 | 0,6 | 0,8 |

On voit que l'on passe par un minimum d'usure pour $\lambda \# 3.10^{-2}$.

On notera par ailleurs que les déterminations semi-empiriques des taux de frettage de tubes minces pour un emmanchement serré aurait conduit à adopter une longueur L de 103,7; on a vérifié que le taux de frettage optimal pour la présente invention était, de façon constante, un peu inférieur aux taux de frettage recommandés pour un emmanchement serré.

On a ensuite procédé à des essais pour apprécier l'optimum de profondeur du durcissement superficiel.

EXEMPLE 2

Partant de l'Exemple 1, une série d'essais ont été effectués avec L = 103,6 ($\lambda = 3,05.10^{-2}$), en faisant varier la profondeur de diffusion d'azote par le temps d'immersion des pièces dans le bain de sels.

Les résultats sont rassemblés dans le tableau II suivant:

TABLEAU II

| profondeur relative p/e | 0,4 | 0,333 | 0,286 | 0,25 | 0,222 | 0,2 | 0,182 | 0,167 |
|---|---|---|---|---|---|---|---|---|
| usure(mm) | - | 0,8 | 0,3 | 0,08 | 0,35 | 1 | 1,5 | 2,6 |

Pour une profondeur de 0,4, la garniture était pratiquement durcie à coeur, et s'est brisée dans les premières minutes de l'essai.

La Demanderesse a alors, à la lumière des essais effectués, et en rapprochant ces essais de ce que sait l'homme du métier des règles des emmanchements serrés de bagues minces frettées, établi des gammes d'excédent relatif de longueur des feuillards par rapport au développé de la fibre neutre d'une garniture non contrainte en fonction des diamètres d'alésage. On notera que l'alésage de plus petit diamètre pratiqué est de 10 mm, avec un feuillard de 1,5 mm d'épaisseur, et que, si fort que soit le diamètre d'alésage, il est inutile de dépasser 4 à 5 millimètres d'épaisseur pour le feuillard.

Le tableau III indique les gammes d'excédents relatifs de longueur $\lambda$ en fonction du diamètre $\varnothing$.

TABLEAU III

| $\varnothing$ alésage (mm) | Excédent relatif $\lambda$ en $10^{-2}$ |
|---|---|
| 10-25 | 3-9 |
| 25-35 | 2,2-4,3 |
| 35-45 | 2-3 |
| 45-55 | 1,7-2,9 |
| 55-100 | 1,1-2,3 |
| 100-140 | 0,7-1,5 |
| 140-260 | 0,4-1 |
| 260 et au delà | 0,3-0,7 |

EXEMPLE 3

On a comparé le taux d'usure d'une articulation telle que définie à l'Exemple 1, avec celui d'articulations traitées suivant des procédés antérieurs. Le Tableau IV présente ces comparaisons

TABLEAU IV

| Nature du coussinet | usure (mm) |
|---|---|
| Exemple 1 | 0,09 |
| Sulfuration électrochimique basse température (FR-A-2 115 505) | 0,45 |
| Couche lamellaire hexagonale (FR-A-2 428 682) | 0,35 |
| Acier chromé dur | grippage |
| Acier recouvert de céramique $Cr_2O_3$ | écaillages |
| Acier rechargé en molybdène | 2 |
| Acier rechargé en stellite | 2 |

EXEMPLE 4

On a comparé l'usure d'une articulation selon l'Exemple 1 avec une articulation en acier X38 massif nitruré. Les résultats sur 5 échantillons sont les suivants:

| | usure (mm) |
|---|---|
| Coussinet selon l'Exemple 1 | 0,08-0,10 |
| Coussinet massif | 0,2-0,25 |

EXEMPLE 5

On a fait varier la nature du traitement thermochimique de diffusion, toutes autres conditions restant égales.

TABLEAU V

| Traitement thermochimique de diffusion | usure (mm) |
|---|---|
| Nitruration en bains de sels | 0,09 |
| Nitruration gazeuse | 0,15 |
| Carbonitruration | 0,12 |
| Cémentation trempe | 0,10 |
| Chromisation | 0,18 |

On voit que, si certains traitements sont plus efficaces que d'autres les résultats sont, dans tous les cas, supérieurs à ceux des articulations classiques.

EXEMPLES D'APPLICATION

6. Sur des Pelles mécaniques

On a appliqué l'invention aux articulations du bras du godet - qui travaillent en oscillation à faible vitesse (0,01 à 0,05 m/s), avec une pression de contact de 120 MPa, à température ambiante et milieu faiblement abrasif, au rythme de 8 h par jour, avec lubrification périodique.

L'axe est en acier trempé par haute fréquence, le coussinet normal en acier massif cémenté trempé. La durée de vie atteint 600 h mais parfois des grippages se manifestent après 50 heures.

La garniture du coussinet selon l'invention était cémentée et trempée. La durée de vie est passée à plus de 1000 heures, sans dégradation des surfaces.

7. Palier de roue de four à sole mobile

La vitesse de rotation est de 10 t/mn (Vg = 0,1 m/s), la pression de contact 10 MPa, la température 200°-300°C, la fréquence de fonctionnement 5 mn toutes les deux heures. L'ambiance est abrasive et le graissage périodique.

L'axe est en acier durci; le palier d'origine est un roulement à rouleaux - la durée de vie était de six mois.

La garniture des coussinets de l'invention était nitrurée au bain de sel. Ces coussinets sont en service depuis plus d'un an, sans dégradation apparente.

8. Articulation d'extrémité de vérin de foreuse

Cette articulation travaille à très faible vitesse en oscillation (Vg = 0,05 m/s).

La pression dépasse 100 MPa, la température de fonctionnement se situe entre -10° et +40°C; la durée de fonctionnement est de 16 heures par jour en ambiance abrasive. On effectue des graissages périodiques.

L'axe est en acier chromé dur. Le coussinet d'origine était en acier 100C6 massif (acier à roulement). Des grippages apparaissaient après quelques semaines.

Selon l'invention, la garniture est en acier cémenté trempé. En plus de 12 mois, aucun grippage ne s'est manifesté.

9. Articulation de pied de bielle de pompe à piston pour hydraulique

Les conditions de travail sont: une oscillation (Vg = 0,3 m/s), une pression de contact 15 MPa, une température de 60°C, une fréquence de 8 h/jour, une ambiance d'huile hydraulique et un graissage par barbotage.

L'axe est en acier nitruré; le coussinet d'origine était en fonte GS. La durée de vie était de 75 heures (grippage).

Selon l'invention, la garniture du coussinet est en acier carbo-nitruré. La durée de vie dépasse 2000 heures.

Les Exemples 4, 6 et 8, conjointement avec le tableau I, font paraître que des contraintes tangentielles de compression dans la face de portée, dans une gamme limitée, ont des effets déterminants sur les qualités de frottement des coussinets, de façon inattendue. Par ailleurs, l'existence et les valeurs de ces contraintes tangentielles de compression ne sont pas apparentes, même pour un homme du métier. Même si l'expérimentation "in situ" n'avait pas été confidentielle, cette expérimentation n'aurait pas été une divulgation.

Par ailleurs, parallèlement aux expérimentations où le traitement de durcissement superficiel est un traitement thermochimique avec diffusion d'un hétéro-élément dans les couches superficielles, la Demanderesse a effectué des expérimentations portant sur d'autres types de durcissement superficiel.

On a réalisé des coussinets de mêmes dimensions qu'à l'exemple 1. Après roulage, les faces de portée des garnitures ont été durcies par trempe précédée d'un chauffage sur une faible profondeur par induction haute fréquence avec un inducteur introduit dans l'évidement intérieur de la garniture. Les tests d'usure, effectués dans les mêmes conditions que dans les exemples, ont montré une usure de l'ordre de 0,20-0,23 mm. Bien que ces résultats apparaissent moins bons que ceux où les garnitures ont subi des traitements thermochimiques, ils restent bons comparés à ceux des paliers classiques correspondants. Par ailleurs, pour des séries très importantes sans changement d'inducteurs, le coût du traitement est très faible, et les cadences peuvent être considérables.

La Demanderesse a également effectué des expérimentations où la surface de portée des garnitures était durcie par écrouissage superficiel.

De façon connue, l'écrouissage superficiel peut être obtenu par :

- Galetage (ou roulage) dans lequel la déformation plastique est provoquée par le roulement de galets ou de billes sur la surface de portée, avant mise en forme tubulaire, en raison de la surface limitée de contact.
- Martelage où l'écrouissage est produit par des chocs d'un marteau dur, généralement mû par air comprimé.
- Le brunissage où un outil dur frotte sous forte pression sur la surface de portée.
- Le grenaillage de précontrainte, dit "Shot Peening" préconisé fréquemment pour améliorer la résistance à la fatigue et à la corrosion sous contrainte, qui consiste à projeter à grande vitesse des billes de verre, d'acier ou de céramique.
- Le moletage qui, outre l'écrouissage, imprime par forgeage de la surface des sculptures propres à servir de réserve de lubrifiant.

Cet écrouissage superficiel provoque, outre un durcissement avec précontrainte résiduelle de compression, une modification locale de la structure cristalline du métal, qui peut aller jusqu'à une structure amorphe, qui diminue les risques de grippage.

Les aciers les plus aptes à l'écrouissage sont les aciers base carbone (type XC 10), les aciers inoxydables austénitiques (type Z 3 CN 18-10) et surtout les aciers au manganèse (type Z 120 M 12, ou Z 120 M 13).

On a réalisé des expérimentations, dans les conditions de l'exemple 1, sur un acier Z 120 M 12 de 2 mm d'épaisseur, moleté avec des stries de profondeur de l'ordre de 0,3-0,4 mm, engendrant un durcissement sur une profondeur atteignant 0,4-0,5 mm environ. Après 200 heures de fonctionnement comme aux divers exemples, l'usure ne dépassait pas 0,1 mm, comparable à celle des meilleurs essais avec traitement thermochimique.

Bien entendu, l'invention n'est pas limitée aux exemples décrits mais embrasse toutes les variantes d'exécution, dans le cadre des revendications.

**Revendications**

1. Coussinet (1) pour articulation ou palier fortement chargé travaillant en ambiance abrasive, comportant un corps (3) généralement annulaire avec un alésage axial (D3) muni d'une garniture (4) où pivote un axe (2) en contact avec une face de portée (4b), de la garniture, cette garniture étant constituée d'un feuillard rectangulaire d'épaisseur (e) appropriée, roulé autour d'un axe perpendiculaire à sa longueur et fretté dans l'alésage (D3), en acier dont au moins la face de portée a subi un traitement de durcissement superficiel, caractérisé en ce que la face de portée est durcie sur une profondeur relative, rapportée à l'épaisseur (e), comprise entre 0,23 et 0,27, ce feuillard présentant, par rapport au développé d'une fibre neutre d'une garniture non contrainte dans l'alésage, un excédent relatif de longueur compris entre 0,3 et $9.10^{-2}$.

2. Coussinet selon la revendication 1, caractérisé en ce que la gamme d'excédent relatif de longueur, exprimé en $10^{-2}$, est définie, en fonction du diamètre $\varnothing$ (D3) de l'alésage, conformément au tableau ci-après:

| $\varnothing$ alésage (mm) | Excédent relatif en $10^{-2}$ |
|---|---|
| 10-25 | 3-9 |
| 25-35 | 2,2-4,3 |
| 35-45 | 2-3 |
| 45-55 | 1,7-2,9 |
| 55-100 | 1,1-2,3 |
| 100-140 | 0,7-1,5 |
| 140-260 | 0,4-1,0 |
| 260 et au-delà | 0,3-0,7 |

3. Coussinet selon une des revendications 1 et 2, caractérisé en ce que l'épaisseur (e) de feuillard est comprise entre 1,5 et 5,0 mm, sans dépasser 15% du diamètre de l'alésage (D3).

4. Coussinet selon une quelconque des revendications 1 à 3, caractérisé en ce que le traitement de durcissement superficiel est un traitement thermochimique provoquant la diffusion d'un hétéro-élément dans ladite profondeur relative.

5. Coussinet selon la revendication 4, caractérisé en ce que l'hétéro-élément est l'azote.

6. Coussinet selon la revendication 5, caractérisé en ce que le traitement thermochimique est une nitruration dans un bain fondu de cyanates et carbonates alcalins.

7. Coussinet selon la revendication 4, caractérisé en ce que l'hétéro-élément est du carbone introduit par cémentation, le feuillard étant ensuite trempé.

8. Coussinet selon la revendication 4, caractérisé en ce que le traitement thermochimique est une carbonitruration.

9. Coussinet selon la revendication 4, caractérisé en ce que l'hétéro-élément est du chrome diffusé par chromisation.

10. Coussinet selon l'une quelconque des revendications 1 à 3, caractérisé en ce que le traitement de durcissement superficiel est une trempe après chauffage superficiel de la face de portée par induction haute fréquence.

11. Coussinet selon l'une quelconque des revendications 1 à 3, caractérisé en ce que le traitement de durcissement superficiel est un écrouissage de la face de portée obtenu par un processus pris parmi le galetage, le martelage, le brunissage, le grenaillage et le moletage.


**Patentansprüche**

1. Buchse (1) für ein hochbelastbares Gelenk oder Lager in verschleißender Umgebung mit folgenden Merkmalen:

   ein im großen und ganzen ringförmiger Körper (3) mit einer Axialbohrung (D3) ist mit einem Einsatz (4) versehen, in welchem eine Achse (2) in Kontakt mit einer Tragfläche (4b) des Einsatzes schwenkt;
der Einsatz ist aus rechteckförmigem Stahlband von geeigneter Dicke (e) gebildet, das um eine zur Längserstreckung senkrechten Achse gewalzt und in die Bohrung hineingeschrumpft worden ist und mindestens dessen Tragseite einer Oberflächenhärtebehandlung unterworfen worden ist,
gekennzeichnet durch folgende Maßnahmen:
die Tragfläche ist bis zu einer relativen Tiefe mit Bezug auf die Dicke (e) zwischen 0,23 und 0,27 gehärtet;
das Stahlband stellt mit Bezug auf eine abgewickelte neutrale Faser eines nicht in die Bohrung hineingezwängten Einsatzes ein Übermaß relativ zur Länge im Bereich zwischen 0,3 und $9.10^{-2}$ dar.

2.  Buchse nach Anspruch 1,

    dadurch gekennzeichnet, daß der Übermaßbereich relativ zur Länge ausgedrückt in $10^{-2}$ als Funktion des Durchmessers (D3) der Bohrung gemäß nachfolgender Tabelle definiert wird:

    | Bohrungsdurchmesser (mm) | Relatives Übermaß in $10^{-2}$ |
    |---|---|
    | 10-25 | 3-9 |
    | 25-35 | 2,2-4,3 |
    | 35-45 | 2-3 |
    | 45-55 | 1,7-2,9 |
    | 55-100 | 1,1-2,3 |
    | 100-140 | 0,7-1,5 |
    | 140-260 | 0,4-1,0 |
    | 260 und darüber | 0,3-0,7 |

3.  Buchse nach einem der Ansprüche 1 und 2,
    dadurch gekennzeichnet, daß die Dicke (e) des Stahlbandes zwischen 1,5 und 5,0 mm beträgt, ohne 15% des Durchmessers der Bohrung (D3) zu übersteigen.

4.  Buchse nach einem der Ansprüche 1 bis 3,
    dadurch gekennzeichnet, daß die oberflächliche Wärmebehandlung eine thermochemische Behandlung darstellt, welche die Diffusion eines Heteroelementes in die angegebene relative Tiefe bewirkt.

5.  Buchse nach Anspruch 4,
    dadurch gekennzeichnet, daß das Heteroelement Stickstoff ist.

6.  Buchse nach Anspruch 5,
    dadurch gekennzeichnet, daß die thermochemische Behandlung eine Nitration in einem Flüssigkeitsbad mit Zyanaten und alkalischen Karbonaten darstellt.

7.  Buchse nach Anspruch 4,
    dadurch gekennzeichnet, daß das Heteroelement Kohlenstoff ist, der durch Einsatzhärten eingeführt wird, wonach das Stahlband abgeschreckt wird.

8.  Buchse nach Anspruch 4,
    dadurch gekennzeichnet, daß die thermochemische Behandlung eine Kohlenstoff-Nitrierung darstellt.

9.  Buchse nach Anspruch 4,
    dadurch gekennzeichnet, daß das Heteroelement durch Chromierung ein diffundiertes Chrom darstellt.

10. Buchse nach einem der Ansprüche 1 bis 3,
    dadurch gekennzeichnet, daß die Oberflächenhärtebehandlung ein Abschrecken nach oberflächlicher Erwärmung der Tragfläche mittels Hochfrequenzinduktion darstellt.

11. Buchse nach einem der Ansprüche 1 bis 3,
    dadurch gekennzeichnet, daß die Oberflächenhärtebehandlung eine Kaltverfestigung der Tragfläche darstellt, die durch ein Verfahren wie Glattwalzen, Hämmern, Feinwalzen, Stahlkiesstrahlen und Prägewalzen besteht.

**Claims**

1. Bush (1) for a heavily loaded pivot or bearing working in an abrasive environment, having a body (3), annular overall with an axial bore (D3) provided with a lining (4) in which a shaft (2) pivots in contact with a bearing face (4$\underline{b}$) of the lining, this lining consisting of a rectangular strip of appropriate thickness (e), wound around an axis perpendicular to its length and hooped in the bore (D3), made of steel of which at least the bearing face has received a surface hardening treatment, characterised in that the bearing face is hardened to a relative depth, related to the thickness (e), of between 0.23 and 0.27, this strip having, with respect to the evolute of a neutral fibre of an unstressed lining in the bore, a relative excess length of between 0.3 and 9 x $10^{-2}$.

2. Bush according to Claim 1, characterised in that the range of relative excess length, expressed in terms of $10^{-2}$, is defined, as a function of the diameter $\varnothing$ (D3) of the bore, in accordance with the following table:

| $\phi$ bore (mm) | Relative excess x $10^{-2}$ |
|---|---|
| 10-25 | 3-9 |
| 25-35 | 2.2-4.3 |
| 35-45 | 2-3 |
| 45-55 | 1.7-2.9 |
| 55-100 | 1.1-2.3 |
| 100-140 | 0.7-1.5 |
| 140-260 | 0.4-1.0 |
| 260 and above | 0.3-0.7 |

3. Bush according to one of Claims 1 and 2, characterised in that the strip thickness (e) is between 1.5 and 5.0 mm, without exceeding 15% of the diameter of the bore (D3).

4. Bush according to one of Claims 1 to 3, characterised in that the surface hardening treatment is a thermochemical treatment causing a heteroelement to be diffused in the said relative depth.

5. Bush according to Claim 4, characterised in that the heteroelement is nitrogen.

6. Bush according to Claim 5, characterised in that the thermochemical treatment is nitriding in a molten bath of cyanates and alkaline carbonates.

7. Bush according to Claim 4, characterised in that the heteroelement is carbon introduced by carburizing, the strip then being quench hardened.

8. Bush according to Claim 4, characterised in that the thermochemical treatment is carbonitriding.

9. Bush according to Claim 4, characterised in that the heteroelement is chromium diffused by means of chromizing.

10. Bush according to any one of Claims 1 to 3, characterised in that the surface hardening treatment is a quench hardening after surface heating of the bearing face by means of highfrequency induction.

11. Bush according to any one of Claims 1 to 3, characterised in that the surface hardening treatment is a work-hardening of the bearing face obtained by means of a process chosen from amongst rolling, hammering, burnishing, shot peening and knurling.

# FIG.1

# FIG.2